(19) **Europäisches Patentamt / European Patent Office / Office européen des brevets**

(11) **EP 3 320 236 B1**

(12) **FASCICULE DE BREVET EUROPEEN**

(45) Date de publication et mention
de la délivrance du brevet:
**20.10.2021 Bulletin 2021/42**

(51) Int Cl.:
**F16H 61/04** *(2006.01)*    **B60K 6/48** *(2007.10)*
**B60K 6/36** *(2007.10)*    **B60K 6/547** *(2007.10)*

(21) Numéro de dépôt: **16739217.4**

(22) Date de dépôt: **15.06.2016**

(86) Numéro de dépôt international:
**PCT/FR2016/051438**

(87) Numéro de publication internationale:
**WO 2017/006005 (12.01.2017 Gazette 2017/02)**

(54) **PROCÉDÉ DE CONTRÔLE DE POSITION D'UN ACTIONNEUR DE BOÎTE DE VITESSES**

VERFAHREN ZUR LAGESTEUERUNG EINES GETRIEBESTELLERS

METHOD FOR CONTROLLING THE POSITION OF A GEARBOX ACTUATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.07.2015 FR 1556429**

(43) Date de publication de la demande:
**16.05.2018 Bulletin 2018/20**

(73) Titulaires:
• **Renault S.A.S.**
  **92100 Boulogne-Billancourt (FR)**
• **NISSAN MOTOR CO., LTD.**
  **Yokohama-shi, Kanagawa 221-0023 (JP)**

(72) Inventeur: **MERIENNE, Ludovic**
**91190 Gif Sur Yvette (FR)**

(74) Mandataire: **Rougemont, Bernard**
**Renault s.a.s**
**TCR GRA 2 36 - Sce 00267**
**1, Avenue du Golf**
**78084 Guyancourt Cedex (FR)**

(56) Documents cités:
**EP-A2- 2 690 320**    **FR-A1- 2 887 495**
**FR-A1- 2 917 479**    **US-A1- 2002 032 100**
**US-B1- 6 246 941**

## Description

La présente invention se rapporte au contrôle des boîtes de vitesses, en particulier des boîtes de vitesses hybrides à clabots, permettant d'atteindre différents rapports de boîte sur deux sources motrices, telles qu'un moteur thermique et une machine électrique de traction.

Plus précisément, elle a pour objet un procédé de contrôle de position d'un actionneur de boîte de vitesses responsable de l'engagement d'un rapport à l'issue d'une phase préliminaire de synchronisation de deux arbres de la boîte par une machine de traction pilotée en couple pour ramener l'écart de régimes des deux arbres à l'intérieur d'une plage autorisant leur accouplement mécanique.

Cette invention trouve une application privilégiée, mais non limitative, sur des boîtes de vitesses dites « à clabots » avec des actionneurs de passage de type baladeur, ne disposant pas de moyens mécaniques de synchronisation. La synchronisation des arbres de la boîte, est cependant nécessaire pour pouvoir engager les clabots, lors des changements de rapports. Elle nécessite un pilotage fin des sources motrices, pour générer un différentiel de régime contrôlé permettant le clabotage.

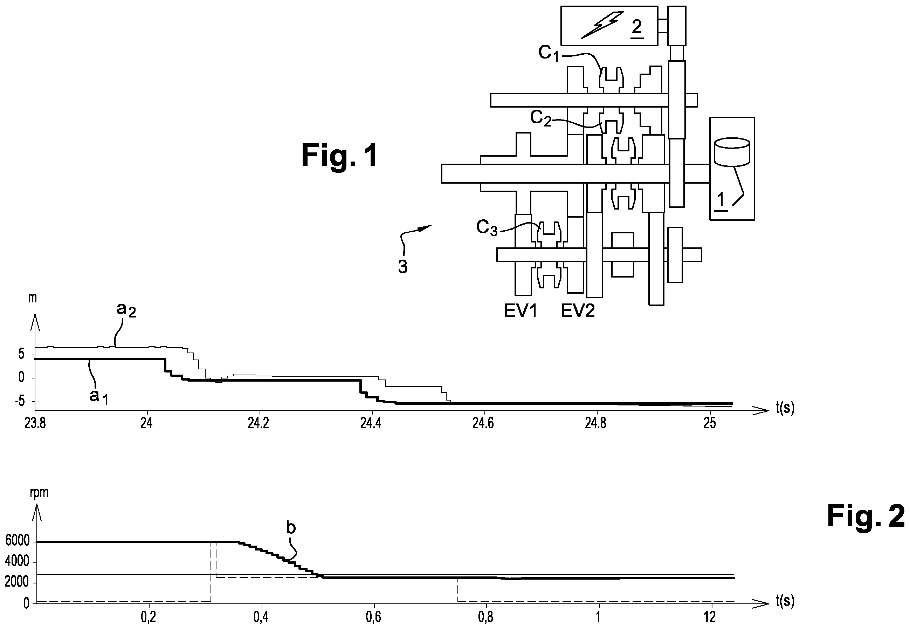

Sur la figure 1, on a représenté un exemple de groupe motopropulseur hybride, composé d'un moteur thermique 1, d'une machine électrique et d'une boîte de vitesses à arbres parallèles 3 munie de trois actionneurs de passage C1, C2, C3 à baladeurs, sans synchroniseurs mécaniques. Dans le cas d'un passage du rapport EV1 (rapport court) vers EV2 (rapport long), la figure 2 montre les différentes étapes du passage. Les courbes (a1) et (a2) montrent respectivement la position de consigne du clabot et sa position mesurée. Une position au-delà de 5mm signifie que le rapport EV1 est engagé. Une position en deçà de -5mm signifie que le rapport EV2 est engagé. Pour le passage du rapport, on commence par mettre le clabot en position neutre à 0mm (aucun rapport engagé). Puis on fait appel à la commande de la machine électrique pour la faire tourner à un régime permettant l'engagement du rapport EV2. La courbe de régime (b) de la machine électrique passe de 6000rpm à environ 2200rpm lors de la synchronisation. Une fois le régime stabilisé, on engage le clabot pour passer le rapport EV2.

La fiabilité requise pour l'enchaînement nécessite de s'assurer du dégagement des clabots du rapport initial, faute de quoi il est impossible d'effectuer la synchronisation de la machine électrique 2. En cas d'échec du « dé-clabotage », l'algorithme de synchronisation de la machine imposerait en effet un couple très important à la boîte, pour tenter de réguler le régime de la machine sur l'objectif de synchronisation. Dans l'exemple du passage de rapport précédent, la machine réalisera son couple minimal qui est de l'ordre de -220Nm (couple de frein). Si le dé-crabotage a échoué et que l'on laisse la machine réaliser ce couple, cela conduit à une décélération intempestive, car le couple de frein de la machine est transmis à la roue. Dans le cas d'un passage rétro (d'EV2 vers EV1 par exemple), l'échec du « dé-clabotage » conduit à une accélération intempestive.

Par la publication FR 2 917 479, on connaît un capteur de position de boîte de vitesses permettant de consolider l'information de rapport engagé dans un système de commande. Ce capteur comprend une sonde coopérant avec une cible liée à un élément d'actionnement interne de la boîte, tel qu'un baladeur, pour fournir un signal analogique converti en signal numérique délivrant une information périodique sur la position de point mort, ou non, de l'élément d'actionnement. La méthode de contrôle décrite dans cette publication présente l'inconvénient d'imposer l'intégration un système de capteur de position dédié à l'intérieur de la boîte, sur l'actionneur de passage.

La présente invention vise à sécuriser la position au neutre d'une boîte de vitesses hybride, sans capteur physique.

Dans ce but, elle propose de s'assurer de la convergence du régime mesuré sur l'un des deux arbres avec un régime observé en fonction de la valeur de l'inertie observée sur cet arbre par rapport à la valeur attendue en fonction de l'actionneur de boîte, et d'une estimation du couple de la machine, en effectuant les opérations suivantes :

- calcul d'une estimation du couple réellement fourni par la machine,
- mise à jour d'une valeur de régime observée en utilisant la dernière valeur d'inertie observée,
- mise à jour de la valeur de l'inertie observée en fonction de l'écart entre le régime mesuré et le régime observé.

La présente invention sera mieux comprise à la lecture de la description suivante d'un mode de réalisation non limitatif de celle-ci, en se reportant aux dessins annexés, sur lesquels :

- la figure 1 est un schéma d'architecture simplifiée de boîte de vitesses hybride,
- les courbes de la figure 2, illustrent la synchronisation d'un passage de vitesses sur celle-ci,
- la figure 3 illustre les résultats d'une première méthode de calcul,
- la figure 4 explique schématiquement le fonctionnement de l'invention,
- la figure 5 précise la méthode de mise à jour de l'inertie,
- les courbes de la figure 6 et celles de la figure 7 résultent de la mise en œuvre de l'invention dans le cas nominal, et dans le cas d'un échec du « dé-clabotage ».

L'équation de mouvement de l'arbre à synchroniser est la suivante :

$$J \dot{\omega} = T,$$

où :

- $J$ est l'inertie de l'arbre à synchroniser,
- $\dot{\omega}$ est l'accélération angulaire de l'arbre, c'est-à-dire la dérivée de sa vitesse de rotation, et
- $T$ est le couple généré sur l'arbre par la machine électrique.

L'unité de calcul du groupe motopropulseur dispose de la mesure de régime de l'arbre ω, ainsi que du couple de consigne de synchronisation $T$. Ces données sont exploitées pour contrôler la position d'un actionneur de boîte responsable de l'engagement d'un rapport, à l'issue d'une phase préliminaire de synchronisation de deux arbres de la boîte par une machine de traction pilotée en couple pour ramener l'écart de régimes des deux arbres à l'intérieur d'une plage autorisant leur accouplement mécanique.

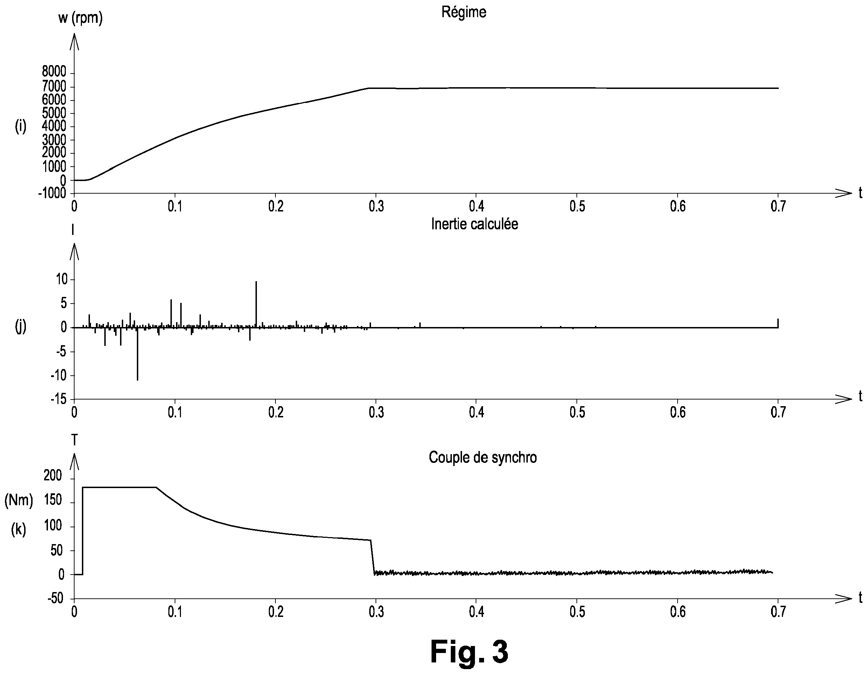

Comme indiqué plus haut, la solution proposée pour sécuriser la position du neutre d'une boite de vitesse hybride repose sur une estimation de l'inertie de l'arbre de la boîte à sécuriser. Un premier mode de contrôle de l'inertie de l'arbre, consiste à calculer son accélération en dérivant la mesure de régime, puis estimer l'inertie en divisant le couple de consigne par l'accélération ainsi calculée. La figure 3 illustre les résultats obtenus par cette méthode sur un exemple concret. Les courbes reproduites sont les suivantes :

- l'évolution du régime ω sur la courbe (courbe i)
- le calcul direct de l'inertie $J$ par la méthode (courbe j), et
- couple de consigne de la synchronisation $T$ sur la figure de bas (courbe k).

En raison du « bruit » de mesure du régime, l'opération de dérivée introduit de telles erreurs, qu'il est impossible par cette méthode d'obtenir une estimation précise de l'inertie, même en ajoutant des filtres passe-bas pour essayer de lisser l'estimation. Pour réaliser l'estimation de l'inertie, cette méthode simple n'est pas suffisamment performante pour être acceptable.

L'invention propose une autre méthode qui permet d'avoir une estimation fine de l'inertie en s'affranchissant du niveau de « bruit » sur la mesure, car elle ne fait appel à aucune opération de dérivation pouvant amplifier le « bruit », mais seulement à des opérations d'intégration, qui filtrent le « bruit ». La méthode consiste à utiliser un observateur du régime de l'arbre, en ajustant la valeur de l'inertie de manière à faire coïncider le régime mesuré avec le régime observé. Selon l'invention, on s'assure de la convergence du régime mesuré sur l'un des deux arbres avec un régime observé en fonction de la valeur de l'inertie observée sur cet arbre par rapport à la valeur attendue en fonction de l'actionneur de boîte, et d'une estimation du couple de la machine. Cette méthode convient en particulier pour contrôler le passage au neutre d'un actionneur de boîte de vitesses lors d'un changement de rapport, mais peut s'appliquer dans des conditions analogues pour contrôler d'autres positions de l'actionneur, sans sortir du cadre de l'invention.

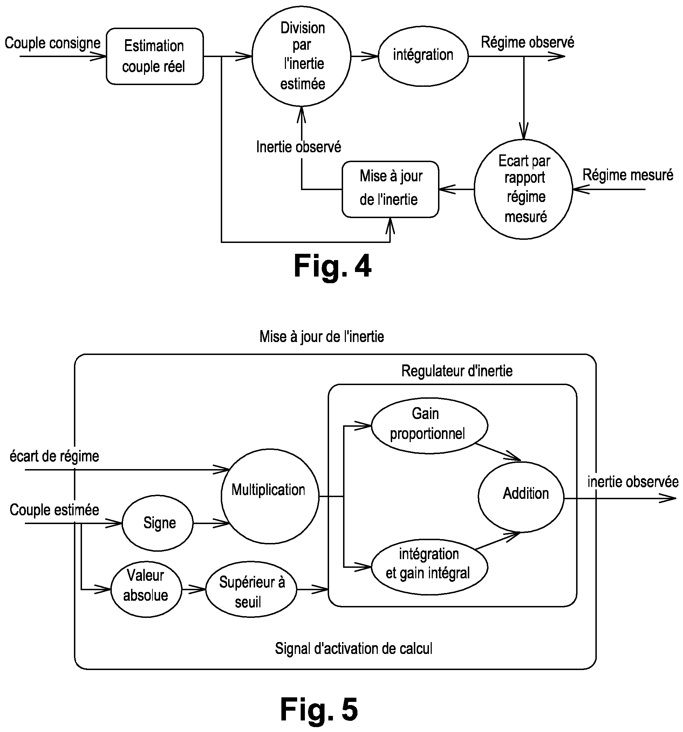

Le fonctionnement est celui de la figure 4. Le bloc d'estimation du couple réel est un simple filtre passe-bas sur la consigne de couple, représentant le temps de réponse de la régulation en couple de la machine électrique. L'estimation du couple réel est divisée par l'inertie estimée, et le « régime observé » est le terme intégré de ce rapport. La mise à jour de l'inertie s'effectue à partir de l'écart entre la valeur du « régime observé » et du régime mesuré, et de l'estimation du couple réel, dans le bloc de mise à jour de l'inertie.

La mise à jour de l'inertie dans ce dernier bloc s'effectue conformément au schéma de la figure 5, au sein d'un régulateur d'inertie, en réponse à un signal d'activation. Ce signal est délivré lorsque la valeur absolue du couple estimé est supérieure à un seuil. L' « inertie observée » est calculée dans le régulateur à partir du produit de l'écart de régime et du couple estimé. Elle correspond à la somme d'un gain proportionnel et d'un gain intégral (obtenu par intégration), sur ce produit.

Les étapes de calcul sont donc les suivantes :

- on calcule l'estimation du couple réellement fourni par la machine, par exemple en filtrant la consigne issue de l'algorithme de synchronisation,
- on met à jour la vitesse observée en utilisant la dernière valeur d'inertie observée,
- on met à jour la valeur de l'inertie observé en fonction de l'écart entre un régime mesuré et un régime observé.

Cette dernière mise à jour peut s'effectuer à la condition que le couple de consigne soit suffisamment important pour conduire à une variation de régime. Le seuil de régime pris en compte est par exemple de de l'ordre de 5Nm pour une machine pouvant fournir jusqu'à 220Nm. Le régime observé est obtenu de préférence par intégration du couple réel estimé, divisé par la dernière valeur d'inertie observée.

Cette séquence d'opérations peut être reproduite à chaque mise à jour de la mesure de régime et du couple de synchronisation. On procédant ainsi, on contrôle l'inertie de l'arbre de boîte à synchroniser, en s'assurant de la convergence du régime mesuré sur l'un des deux arbres avec un régime observé en fonction de la valeur de l'inertie observée sur cet arbre et d'une estimation du couple de la machine.

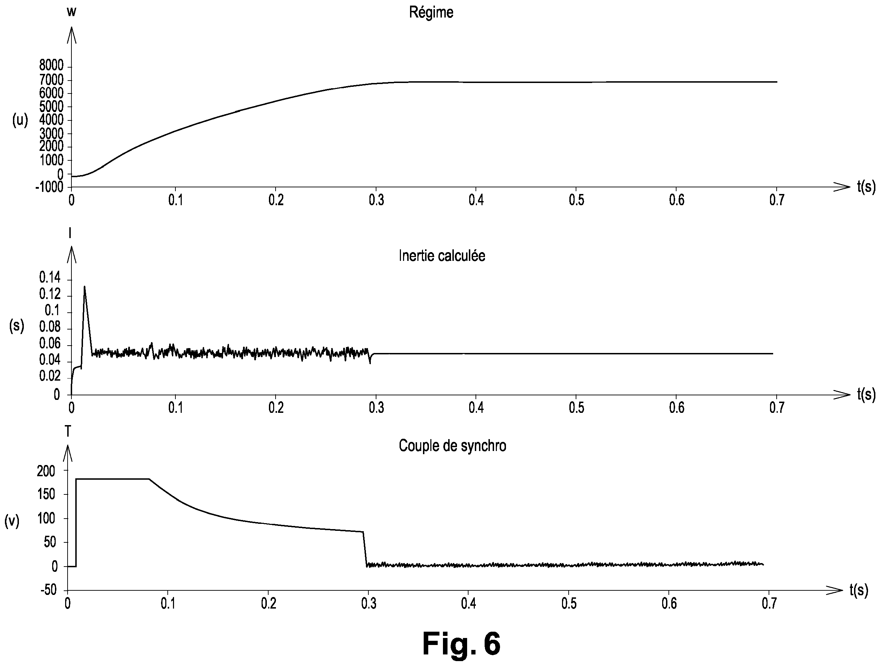

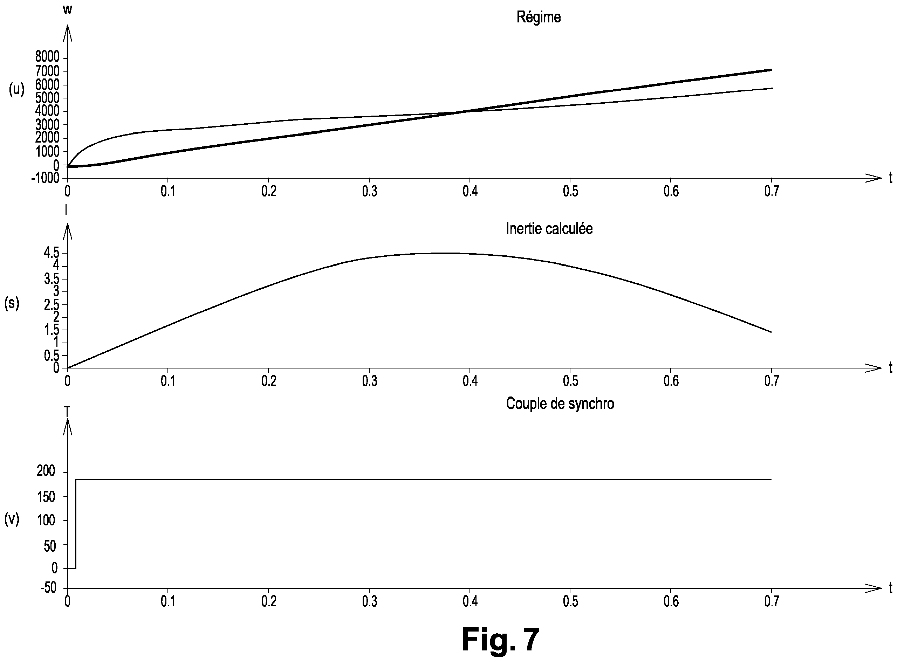

Les résultats obtenus par la mise en œuvre de la méthode sont illustrés par les courbes des figures 6 et 7. La figure 6 traduit l'application de la méthode dans une situation normale de fonctionnement de l'actionneur de passage (sans échec du clabotage). La première courbe (*u*) superpose les régimes mesuré et observé, l'observateur s'assurant de la convergence du régime observé vers la mesure. Sur la seconde courbe (*s*), on voit l'évolution de l'inertie observée *J*. Sur la dernière courbe (*t*), on voit l'évolution du couple de consigne de synchronisation *T*.

Les courbes (*u*), (*s*), (*v*) de la figure 7 correspondent à celles de la figure 6, en traduisant un échec du dé-clabotage, car l'inertie observée dépasse le seuil des 900gm$^2$ en environ 50ms. Dans une telle situation, si on coupe la séquence de synchronisation au bout de seulement 50ms, le conducteur ne sent pas le couple fourni à la roue sur cette petite durée. La coupure de la séquence permet d'éviter les accélérations et les décélérations intempestives normalement ressenties en cas d'échec du dé-clabotage.

Pour s'assurer que la synchronisation est faite dans les conditions nominales, l'invention propose d'introduire dans la commande un « observateur d'inertie » de la machine, qui réalise la synchronisation. En cours de régulation en régime, l'inertie sur l'arbre doit normalement se limiter à celle de la machine (car le clabot est en position neutre), de l'ordre de 50gm$^2$. En revanche, si le dé-clabotage a échoué, l'inertie du véhicule ramenée à la machine, conduit à une inertie équivalente de l'ordre de 1kgm$^2$. En estimant l'inertie en ligne conformément à l'invention, on peut couper la synchronisation, dès que l'inertie observée dépasse un seuil (par exemple de 900gm$^2$ dans l'exemple décrit).

En résumé, la méthode proposée consiste en une série d'opérations permettant de détecter de manière fiable les défaillances éventuelles des actionneurs de la boîte, et de sécuriser les passages de vitesses, en cas d'échec de dé-clabotage, en mettant en œuvre un « régulateur d'inertie ». virtuel, qui additionne un gain proportionnel et un gain intégral sur le produit de l'écart de régime par le couple estimé. Cette opération garantit un niveau de prestation élevé à la boîte de vitesses. Dans l'exemple de réalisation décrit, le régulateur est capable de déceler une défaillance de l'actionneur, lors d'une variation d'un rapport de 20, entre l'inertie prévue, et l'inertie observée.

Par ailleurs, on constate que la précision de l'estimation est suffisante pour permettre d'autres fonctions comme par exemple :

- vérifier le découplage du moteur thermique, en observant que l'inertie a diminué, ou

- s'assurer de l'engagement d'un nouveau rapport de boîte, par le changement de l'inertie du véhicule ramenée au moteur.

## Revendications

1. Procédé de contrôle de position au neutre d'un actionneur de boîte de vitesses responsable de l'engagement d'un rapport à l'issue d'une phase préliminaire de synchronisation de deux arbres de la boîte par une machine de traction pilotée en couple pour ramener l'écart de régime des deux arbres à l'intérieur d'une plage autorisant leur accouplement mécanique, selon lequel on s'assure de la convergence du régime mesuré sur un des deux arbres avec une valeur de régime observée en fonction d'une valeur de l'inertie observée sur cet arbre et d'une estimation du couple de la machine, **caractérisé en ce qu'**on effectue les opérations suivantes :

   - calcul d'une estimation du couple réellement fourni par la machine en filtrant la consigne issue de l'algorithme de synchronisation,
   - mise à jour de la valeur de régime observée sur l'arbre en utilisant la dernière valeur d'inertie observée sur celui-ci,
   - mise à jour de la valeur d'inertie observée, dans un régulateur d'inertie, en fonction de l'écart entre la valeur du régime observé et du régime mesuré sur l'arbre.

2. Procédé de contrôle de position selon la revendication 1, **caractérisé en ce que** la mise à jour de l'inertie est effectuée à condition que le couple de la machine de traction soit suffisamment important pour conduire à une variation de régime significative.

3. Procédé de contrôle selon la revendication 2, **caractérisé en ce que** la mise à jour de l'inertie est opérée dans un régulateur d'inertie en additionnant un gain proportionnel et un gain intégral sur le produit de l'écart de régime par le couple estimé.

4. Procédé de contrôle selon la revendication 2 ou 3, **caractérisé en ce que** le seuil de régime est de l'ordre de 5Nm pour une machine pouvant fournir jusqu'à 220Nm.

5. Procédé de contrôle de position selon l'une des revendications précédentes, **caractérisé en ce que** le régime observé est obtenu par intégration du couple réel estimé, divisé par la dernière valeur d'inertie observée.

## Patentansprüche

1. Verfahren zur Steuerung einer Neutrallage eines für das Einlegen einer Gangstufe zuständigen Getriebestellers im Anschluss an eine vorhergehende Synchronisierungsphase von zwei Wellen des Getriebes durch eine drehmomentgesteuerte Traktionsmaschine, um die Drehzahlabweichung der zwei Wellen in einen Bereich zu bringen, der ihre mechanische Kopplung gestattet, mittels dessen man sich von der Übereinstimmung der Drehzahl, die an einer der zwei Wellen gemessen wird, mit einem beobachteten Drehzahlwert in Abhängigkeit von einem an dieser Welle beobachteten Trägheitswert und einer Schätzung des Drehmoments der Maschine überzeugt, **dadurch gekennzeichnet, dass** die folgenden Operationen durchgeführt werden:

- Berechnen einer Schätzung des tatsächlich durch die Maschine gelieferten Drehmoments durch Filtern des sich aus dem Synchronisierungsalgorithmus ergebenden Sollwerts,
- Aktualisieren des an der Welle beobachteten Drehzahlwerts unter Verwendung des letzten Trägheitswerts, der an dieser beobachtet wurde,
- Aktualisieren des beobachteten Trägheitswerts in einem Trägheitsregler in Abhängigkeit von der Abweichung zwischen dem beobachteten Drehzahlwert und der an der Welle gemessenen Drehzahl.

2. Verfahren zur Lagesteuerung nach Anspruch 1, **dadurch gekennzeichnet, dass** das Aktualisieren der Trägheit unter der Bedingung durchgeführt wird, dass das Drehmoment der Traktionsmaschine ausreichend groß ist, um zu einer wesentlichen Drehzahländerung zu führen.

3. Verfahren zur Steuerung nach Anspruch 2, **dadurch gekennzeichnet, dass** das Aktualisieren der Trägheit in einem Trägheitsregler vorgenommen wird, indem eine Proportionalverstärkung und eine Integralverstärkung zu dem Produkt aus der Drehzahlabweichung und dem geschätzten Drehmoment addiert werden.

4. Verfahren zur Steuerung nach Anspruch 2 oder 3, **dadurch gekennzeichnet, dass** der Drehzahlschwellenwert für eine Maschine, die bis zu 220 Nm liefern kann, in der Größenordnung von 5 Nm liegt.

5. Verfahren zur Lagesteuerung nach einem der vorhergehenden Ansprüche, **dadurch gekennzeichnet, dass** die beobachtete Drehzahl durch Integration des geschätzten tatsächlichen Drehmoments, geteilt durch den letzten beobachteten Trägheitswert, erhalten wird.

## Claims

1. Method for checking the neutral position of a gearbox actuator responsible for engaging a gear ratio at the end of a preliminary phase of synchronizing two shafts of the gearbox using a traction machine controlled in torque to bring the discrepancy in the speeds of the two shafts back inside a range that allows them to be mechanically coupled, whereby convergence of the measured speed measured on one of the two shafts with a value of the observed speed observed as a function of a value of the observed inertia observed on this shaft and of an estimate of the torque of the machine is ensured, **characterized in that** the following operations are carried out:

- an estimate of the torque actually supplied by the machine is calculated by filtering the setpoint emanating from the synchronization algorithm,
- the value for the observed speed observed on the shaft is updated by using the last value for the observed inertia observed thereon,
- the observed inertia value is updated, in an inertia regulator, as a function of the discrepancy between the value of the observed speed and of the measured speed of the shaft.

2. Position checking method according to Claim 1, **characterized in that** the updating of the inertia is performed on the condition that the torque of the traction machine is high enough to lead to a significant variation in speed.

3. Checking method according to Claim 2, **characterized in that** the updating of the inertia is performed in an inertia regulator by summing a proportional gain and an integral grain over the product of the speed discrepancy times the estimated torque.

4. Checking method according to Claim 2 or Claim 3, **characterized in that** the speed threshold is of the order of 5 Nm for a machine capable of supplying up to 220 Nm.

5. Position checking method according to one of the preceding claims, **characterized in that** the observed speed is obtained by integrating the estimated actual torque, divided by the last observed inertia value.

**Fig. 1**

**Fig. 2**

**Fig. 3**

**Fig. 4**

**Fig. 5**

Fig. 6

Régime

Inertie calculée

Couple de synchro

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2917479